# EUROPÄISCHE PATENTSCHRIFT

(11) **EP 1 397 323 B1**
(45) Veröffentlichungstag und Bekanntmachung des Hinweises auf die Patenterteilung: **10.11.2004**
(21) Anmeldenummer: 02745283.8
(22) Anmeldetag: 07.05.2002
(51) Int. Cl.: C04B 28/06, C04B 14/04, F24C 3/00

(54) **HITZEBESTÄNDIGES UND FEUERBESTÄNDIGES FORMTEIL**
HEAT- AND FIRE-RESISTANT MOULDED PART
PIECE MOULEE RESISTANTE AUX HAUTES TEMPERATURES ET AU FEU

(30) Priorität: 08.05.2001 DE 10122232
(43) Veröffentlichungstag der Anmeldung: 17.03.2004
(73) Patentinhaber: PROMAT INTERNATIONAL N.V., 2830 Tisselt (BE)
(72) Erfinder: OPSOMMER, Ann, B-1800 Koningslo (Vilvoorde) (BE); ANTON, Octavian, B-1200 Brussel (BE); PICKHARD, Walter, CH-6274 Eschenbach (CH); MAHIEU, Francis, B-3600 Genk (BE)
(74) Vertreter: Schreiber, Christoph, Dr.
(86) Internationale Anmeldenummer: PCT/EP2002/005018
(87) Internationale Veröffentlichungsnummer: WO 2002/090289

(56) Entgegenhaltungen:
- WO-A-02/28799
- DE-A- 3 522 588
- DE-C- 19 859 084
- US-A- 3 042 536
- US-A- 5 542 976
- US-A- 5 786 045
- PATENT ABSTRACTS OF JAPAN vol. 013, no. 328 (C-621), 24. Juli 1989 (1989-07-24) & JP 01 108174 A (ASAHI GLASS CO LTD), 25. April 1989 (1989-04-25)

## Beschreibung

Gegenstand der vorliegenden Erfindung ist ein hitzebeständiges und feuerbeständiges Formteil in Form eines künstlichen Holzscheites für Kamine, einer Wärmedämmplatte oder eines Leichtbauziegelsteins mit einer Dichte von 400 bis 1.000 kg/m³ bestehend aus hydraulisch abgebundenen Gemischen sowie Verfahren zur Herstellung derselben.

Hitzebeständige und feuerbeständige Formteile bestehend aus hydraulisch abgebundenen Gemischen werden unter anderem verwendet als künstliche Holzscheite für Kamine, aber auch als Wärmedämmplatten oder als Leichtbauziegelsteine.

So beschreibt die US 4,940,407 derartige künstliche Holzscheite, die jedoch aufgrund ihrer hohen spezifischen Dichte sich nur sehr langsam aufheizen, viel Energie speichern und demzufolge sich auch nur sehr langsam wieder abkühlen. Sie sind obendrein sehr schwer.

Die US 5,800,875 beschreibt künstliche Holzscheite, welche überwiegend aus Mineralwollefasern bestehen und einem hochtemperaturbeständigen Bindemittel. Die fertig abgebundene Form wird dann in geeigneter Weise bemalt, nochmals getrocknet und für den Verkauf verpackt. Durch die Verwendung der Mineralwollefasern ist die Temperaturbeständigkeit beschränkt. Außerdem ist es aus Gründe der Sicherheit unerwünscht, wenn Bruchstücke derartiger Fasern und Faserstücke in die Raumluft von bewohnten Räumen eindringen können.

US 5,612,266 beschreibt künstliche Holzscheite, die hergestellt werden, in dem ein mineralischer Schaum in Formen gegeben wird, um dort auszuhärten. Diese Produkte enthalten organische Komponenten, die beim Erhitzen zu unverwünschter Geruchsbildung führen.

Die DE 195 17 267 C1 beschreibt ein Material mit guten Brandschutzeigenschaften enthaltend mindestens 5 Gew.-% Ettringit zusammen mit kleinen Mengen Xonotlit und Tonerdeschmelzzement. Das Ettringit soll sich beim Erhitzen unter Energieverbrauch zersetzen, um so die Brandschutzeigenschaften zu verbessern. Ein derartiges Material ist für die vorliegende Erfindung nicht brauchbar.

US 3,042,536 betrifft ein Füllmaterial, das neben Tonerdeschmelzzement Calciumsilikat beispielsweise in Form von Xonotlit zusammen mit Asbestfasem enthält. Formteile aus diesem Material sind nicht beschrieben.

WO 02/28799, ein Stand der Technik nach Art. 54(3) EPC beschreibt ähnliche Platter zur Verwendung als Brandschutzmaterial für Tunnelban.

Die Erfindung hat sich somit zunächst die Aufgabe gestellt, künstliche Holzscheite für Kamine zur Verfügung zu stellen, welche eine möglichst geringe Dichte aufweisen und daher nur eine relativ geringe Menge an Wärmeenergie aufnehmen und wieder abgeben. Diese Produkte erwärmen sich daher schnell und kühlen auch schnell wieder ab. Dies führt nicht nur zu einer Ersparnis von Heizenergie, sondern auch zu erhöhter Sicherheit, weil nach dem Abschalten der Beheizung die künstlichen Holzscheite nur noch sehr kurze Zeit so heiß sind, dass sie bei Berührung zur Verbrennungen führen oder bei Berührung mit brennbarem Material dieses entzünden könnten.

Weiterhin hat sich die Erfindung die Aufgabe gestellt, aus einem derartigen Material auch Wärmedämmplatten oder Leichtbauziegelsteine zur Verfügung zu stellen, da an diese ähnliche Anforderungen gestellt werden.

Diese Aufgaben werden überraschenderweise besonders gut gelöst durch hydraulisch abgebundene Gemische enthaltend im noch nicht abgebundenen Gemisch außer Wasser, Tonerdeschmelzzement gegebenenfalls im Gemisch mit Portlandzement, Phosphatbinder oder Wasserglas, Füllstoffe sowie gewünschtenfalls Fasern, Abbindebeschleuniger, Abbindeverzögerer, Plastifizierungsmittel und Schaumbildner, wobei das noch nicht abgebundene Gemisch 10 bis 60 Gew.-% Tonerdeschmelzzement und bis 10 bis 60 Gew.-% Xonotlite enthält.

Typischerweise enthält die noch nicht abgebundene Mischung 50 bis 200 Gew.-Teile Tonerdeschmelzzement und 10 bis 250 Gew.-Teile Xonotlit.

Als Xonotlit wird in der Praxis der synthetische Xonotlit verwendet, der bei dem am häufigsten angewendeten Verfahren in Form von verfilzten Kügelchen anfällt. Erfindungsgemäß kann aber auch nadelförmiges Material eingesetzt werden, welches beispielsweise bei der Verarbeitung des kugelförmig verfilzten Xonotlit als Nebenprodukt oder beim Recycling von Xonotlitabfällen und Staub anfällt.

Die Verwendung von verfilzten Kügelchen ist besonders bevorzugt. Solches Xonotlit kann durch ein "Erhitzen unter Rühren" gemäß US 3,501,324 oder GB 1 277 272 hergestellt werden.

Als Xonotlite geeignet sind insbesondere synthetische Handelsprodukte wie Promaxon®, die von der Firma Promat hergestellt und vertrieben werden. Durch Zusatz von größeren Mengen an Xonotlit kann die Dichte verringert werden und die Thixotropie des noch nicht abgebundenen Gemisches erhöht werden. Dadurch werden unerwünschter Absetzerscheinungen und damit Inhomogenitäten vermieden.

Die Dichte der erfindungsgemäßen Formteile liegt im Bereich von 400 bis 1.000 kg/m³, bevorzugt im Bereich vom 400 bis weniger als 700 kg/m³.

Als Füllstoffe werden vorzugsweise eingesetzt Wollastonite, Tobermorit, feinteilige, amorphe Kieselsäure und /oder reaktives Aluminiumoxid.

Als Leichtfüllstoffe kommen vor allem in Frage solche aus der Gruppe der Perlite, Vermiculite, Flugaschen und/oder Glaskugeln.

Das Formen erfolgt beispielsweise durch Einbringen in Formen z.B. durch Gießen, kann aber auch durch Extrusion oder Verpressen durchgeführt werden. Auf diese Weise können künstliche Holzscheite für Kamine aber auch Wärmedämmplatten oder Leichtbauziegelsteine hergestellt werden.

Bevorzugte Gemische enthalten 20 bis 40 Gew.-% synthetische Xonotlite, 20 bis 40 Gew.-% Tonerdeschmelzzement, 0 bis 50, vorzugsweise 10 Gew.-% feine amorphe Kieselsäure, welche sowohl als Bindemittel wirkt, als auch die Fließeigenschaften des Gemisches verbessert.

In einem weiteren bevorzugten Gemisch betragen die Anteile 20 bis 40 Gew-% Xonotlite und 40 bis 60 Gew.-% Tonerdeschmelzzement.

Wollastonit wird in Mengen zwischen 0 und 40, vorzugsweise 20 bis 30 Gew.-%, besonders bevorzugt 30 Gew.-% zugegeben. Wollastonit verbessert die Wärmebeständigkeit und Widerstandsfähigkeit gegen thermische Schocks, die bei bekannten Produkten nach im Stand der Technik oft zur Rissebildung und vorzeitigen Zerstörung geführt haben. 0 bis 5 Gew.-%, vorzugsweise 2 % von Phosphaten erhöhen ebenfalls die Temperaturbeständigkeit. Geeignet sind beispielsweise Natriumpolyphosphatgläser wie sie von der Firma Chemische Fabrik Budenheim unter der Bezeichnung Budit 8 H vertrieben werden. Weiterhin können die Gemische übliche Abbindebeschleuniger, Abbindeverzögerer, Plastifizierungsmittel und Schaumbildner enthalten. Gewünschtenfalls kann das Material durch 0 bis 5, vorzugsweise 2 bis 3 Gew.-% Fasern mechanisch verstärkt werden, wobei so geringe Mengen selbst organischer Fasern zu keiner Geruchsbelästigung oder sonstigen unerwünschten Eigenschaften führen. Geeignete Fasern sind beispielsweise MMMF (Man Made Mineral Fibers), wie Glasfasern. Geeignete aber weniger bevorzugte Fasern sind Cellulosefasern, organische Fasern wie PVA oder PP.

Übliche Abbindebeschleuniger, Abbindeverzögerer, Plastifiziermittel und Schaumbildner können zugesetzt werden, insbesondere um das Herstellungsverfahren zu erleichtern. Zu diesen Zusätzen zählen Calciumhydroxid, Natronlauge, Natriumcarbonat, Calciumcarbonat, Lithiumcarbonat, Borax, Zitronensäure, Aluminiumhydroxid. Bevorzugt wird Calciumcarbonat, welches sowohl als Abbindebeschleuniger wirkt als auch als geeigneter Füllstoff.

Die erfindungsgemäßen Formteile sind bevorzugt frei von Asbestfasern und Materialien, die sich bei Wärmeeinwirkung zersetzen. Im Gegensatz zum Beispiel zur DE 195 17 267 C1 enthält das erfindungsgemäße Material im wesentlichen kein Ettringit, zumindest weniger als 5 Gew.-%. Das Material ist vorzugsweise frei von organischen Fasern etc. Die erfindungsgemäßen Formteile sind für ein wiederholtes Erhitzen und Abkühlen vorgesehen. Es ist daher nicht sinnvoll, Bestandteile beizufügen, die sich beim ersten Erhitzen zersetzen.

Das erfindungsgemäße Verfahren zur Herstellung dieser Formteile erfolgt insbesondere dadurch, dass das Gemisch aus Tonerdeschmelzzement gegebenenfalls im Gemisch mit Portlandzement, Phosphatbindern oder Wasserglas, Füllstoffen sowie gewünschtenfalls Fasern, Abbindebeschleunigern, Abbindeverzögerern, Plastifizierungsmitteln und Schaumbildnern mit Wasser vermischt, geformt und zum Abbinden gebracht wird, wobei die noch nicht abgebundene Mischung 10 bis 60 Gew.-% Tonerdeschmelzzement und 10 bis 60 Gew.-% Gew.-Teile Xonotlit enthalten sollte.

Insbesondere wenn künstliche Holzscheite für Kamine hergestellt werden, werden diese entweder bereits im Gemisch mit feuerfesten Pigmenten eingefärbt oder aber als fertig abgebundene Holzscheite nachträglich mit feuerfesten Pigmentfarben angefärbt.

Die Untersuchung der erfindungsgemäß hergestellten Produkte hat ergeben, dass sie eine sehr gute strukturelle und dimensionale Stabilität aufweisen und sehr widerstandsfähig sind gegen thermische Schocks. Sie weisen hohe mechanische Fertigkeit und dennoch nur eine Dichte von 400 bis 1.000 kg/m³ auf. Dies führt dazu, dass nur wenig Energie gespeichert wird, da das System eine geringe, spezifische Wärme aufweist. Die wiederum führt zu raschem Erhitzen und raschem Abkühlen. Die Produkte können somit relativ bald gefahrlos berührt werden, nachdem die Heizung abgestellt ist.

Insbesondere, wenn aus dem Material Wärmedämmplatten oder Leichtbauziegelsteine hergestellt werden, weisen sie gute Isoliereigenschaften auf, wobei die sogenannten Lambdawerte durch Variation des Verhältnisses Zement zu Xonotlit eingestellt werden können. Auch diese Produkte enthalten keine gefährlichen Fasern oder erzeugen beim Erhitzen unerwünschte Gerüche durch Zersetzung der organischen Komponenten. Sowohl diese Wärmedämmplatten als auch die Leichtbauziegelsteine können zu verschiedenen Zwecken eingesetzt werden, beispielsweise für Wärmespeicheröfen oder zur Wärmeisolierung in der Industrie bei der Herstellung von Aluminium, Keramik und Zement.

Figur 1 zeigt die Struktur von Xonotlit in Form von Nadeln.

Figur 2 zeigt Xonotlit in Form von verfilzten Kügelchen.

### Beispiele

Die Erfindung wird durch die nachfolgenden Beispiele weiter erläutert.

### Beispiel 1

21,8 Gewichtsprozent Xonotlitpulver, 18,2 Gewichtsprozent Wollastonit und 56.6 Gewichtsprozent Tonerdeschmelzzement (Secar71) wurden trocken gemischt.

Hierzu wurde eine Mischung von Wasser, Plastifiziermittel (0,7 Gewichtsprozent) und Glasfasern (2 Gewichtsprozent) hergestellt und zu der Mischung von Tonerdeschmelzzement und Xonotlit zugegeben, so dass ein Wasser zu Feststoff Verhältnis von 1,18 entstand. Die Mischung wurde homogenisiert. Li₂CO₃ (0,7 Gewichtsprozent) wurde zugegeben und für eine Minute vermischt, wonach das Produkt in eine Form gegeben wurde.

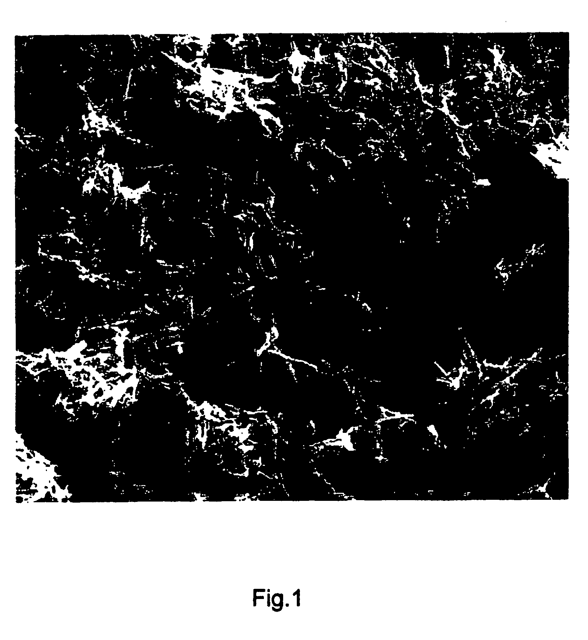

Das eingesetzte Xonotlit wurde hergestellt durch Schneidmahlen eines Xonotlitproduktes, das durch Gießen und hydrothermale Behandlung hergestellt wurde. Ein solches Xonotlit liegt in Form von Nadeln vor. (vgl Figur 1). Die Widerstandsfähigkeit gegen wiederholte Temperaturschwankungen wurde getestet durch schnelles Abkühlen einer Probe nach fünfminütigem Erhitzen auf 1000°C. Das Produkt zeigt zufriedenstellende Eigenschaften.

### Beispiel 2

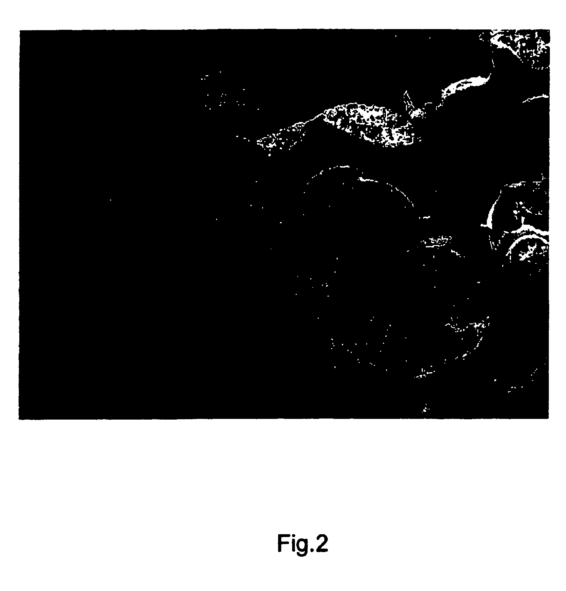

30 Gewichtsprozent Xonotlit, 10 Gewichtsprozent Tobermoritpulver und 56,6 Gewichtsprozent Tonerdeschmelzzement (Secar71) wurden trocken gemischt. Es wurde ein Xonotlit eingesetzt, das durch "Erhitzen unter Rühren" hergestellt wurde. Hierdurch werden, wie in der Beschreibung erläutert, verfilzte Kügelchen erhalten. Die entsprechende Struktur ist in Figur 2 dargestellt. Die weitere Verarbeitung war wie in Beispiel 1, jedoch wurde ein Wasser-Feststoffverhältnis von 1,8 eingesetzt.

Die Formkörper wurden ebenfalls gemäß dem im Beispiel 1 beschriebenen Testverfahren getestet. Das Produkt zeigte keine Sprünge nach dem Erhitzen.

### Beispiel 3

Eine Mischung aus 40 Gewichtsprozent kugelförmigen Xonotlit und 56,6 Gewichtsprozent Tonerdeschmelzzement (Secar71) wurden gemischt. Die weitere Verarbeitung und Testung war wie in Beispiele 1 und 2, auch mit einem Wasser-Feststoffverhältnis von 1,8. Das Produkt zeigte keine Sprünge nach dem Erhitzen.

## Patentansprüche

1. Hitzebeständiges und feuerbeständiges Formteil in Form eines künstlichen Holzscheites für Kamine oder eines Leichtbauziegelsteins mit einer Dichte von 400 bis 1.000 kg/m³ bestehend aus hydraulisch abgebundenen Gemischen enthaltend im noch nicht abgebundenen Gemisch außer Wasser 10 bis 60 Gew.-% Tonerdeschmelzzement und 10 bis 60 Gew.-% Xonotlite.

2. Formteil gemäß Anspruch 1, **dadurch gekennzeichnet, dass** die Mischung 20 bis 40 Gew.-% Tonerdeschmelzzement und 20 bis 40 Gew.-% synthetisches Xonotlit enthält.

3. Formteil gemäß Anspruch 1 oder 2, **dadurch gekennzeichnet, dass** es als Füllstoffe Wollastonit, Tobermorit, feinteilige, amorphe Kieselsäure und/oder reaktives Aluminiumoxid enthält.

4. Formteil gemäß einem der Ansprüche 1 bis 3, **dadurch gekennzeichnet, dass** es Leichtfüllstoffe aus der Gruppe Perlite, Vermiculite, Flugaschen und/oder Glaskugeln enthält.

5. Verfahren zur Herstellung eines hitzebeständigen und feuerbeständigen Formteils nach einem der Ansprüche 1 bis 4, **dadurch gekennzeichnet, dass** ein Gemisch aus Tonerdeschmelzzement gegebenenfalls im Gemisch mit Portlandzement, Phosphatbindern oder Wasserglas, Füllstoffen sowie gewünschtenfalls Fasern, Abbindebeschleunigern, Abbindeverzögerern, Plastifizierungsmitteln und Schaumbildnern, mit Wasser vermischt geformt und zum Abbinden gebracht wird, wobei die noch nicht abgebundene Mischung 10 bis 60 Gew.-% Tonerdeschmelzzement und 10 bis 60 Gew.-% Xonotlit enthält.

6. Verfahren gemäß Anspruch 5 zur Herstellung von einem künstlichen Holzscheit für Kamine, **dadurch gekennzeichnet, dass** das noch nicht abgebundene Gemisch in eine Form eingebracht wird, die natürlichen Holzscheiten entspricht.

7. Verfahren gemäß Anspruch 6, **dadurch gekennzeichnet, dass** entweder das Gemisch mit feuerfesten Pigmenten eingefärbt wird oder der fertig abgebundene Holzscheit nachträglich mit feuerfesten Pigmentfarben äußerlich angefärbt wird.

8. Verwendung eines hydraulisch abgebundenen Gemisches enthaltend im noch nicht abgebundenen Gemisch außer Wasser Tonerdeschmelzzement gegebenenfalls im Gemisch mit Portlandzement, Phosphatbindern oder Wasserglas, Füllstoffen sowie gewünschtenfalls Fasern, Abbindebeschleunigern, Abbindeverzögerern, Plastifizierungsmittel und Schaumbildnern, wobei die noch nicht abgebundene Mischung 10 bis 60 Gew.-% Tonerdeschmelzzement und 10 bis 60 Gew.-% Xonotlite enthält zur Herstellung eines Formteils nach einem der Ansprüche 1 bis 4.

9. Verwendung eines hitzebeständiges und feuerbeständiges Formteils in Form einer Wärmedämmplatte mit einer Dichte von 400 bis 1.000 kg/m³ bestehend aus hydraulisch abgebundenen Gemischen enthaltend im noch nicht abgebundenen Gemisch außer Wasser 10 bis 60 Gew.-% Tonerdeschmelzzement und 10 bis 60 Gew.-% Xonotlite zur Wärmedämmung.

## Claims

1. A heat-resistant and refractory molded part in the form of an artificial log for fireplaces or a light-weight constructional brick having a density of from 400 to 1000 kg/m³ composed of hydraulically cured compositions, wherein the uncured composition comprises from 10 to 60% by weight of aluminous cement and from 10 to 60% by weight of xonotlite in addition to water.

2. The molded part according to claim 1, **characterized in that** said composition comprises from 20 to 40% by weight of aluminous cement and from 20 to 40% by weight of synthetic xonotlite.

3. The molded part according to claim 1 or 2, **characterized by** comprising wollastonite, tobermorite, finely divided amorphous silica and/or reactive aluminum oxide as fillers.

4. The molded part according to any of claims 1 to 3, **characterized by** comprising light-weight fillers selected from the group consisting of pear-lites, vermiculites, fly ashes and/or glass beads.

5. A method for the preparation of a heat-resistant and refractory molded part according to any of claims 1 to 4, **characterized in that** a mixture of aluminous cement, optionally in admixture with Portland cement, phosphate binders or water glass, fillers and, if desired, fibers, curing accelerators, curing delayers, plasticizing agents and foaming agents, is mixed with water, the composition is molded and cured, wherein the uncured composition comprises from 10 to 60% by weight of aluminous cement and from 10 to 60% by weight of xonotlite.

6. The method according to claim 5 for the preparation of an artificial log for fireplaces, **characterized in that** the uncured composition is placed into a mold which corresponds to the shape of natural logs.

7. The method according to claim 6, **characterized in that** either the composition is colored with refractory pigments, or else the ready-cured log is colored later externally with refractory pigment paints.

8. Use of an hydraulically cured composition comprising, in an uncured state, in addition to water, aluminous cement, optionally in admixture with Portland cement, phosphate binders or water glass, fillers and, if desired, fibers, curing accelerators, curing delayers, plasticizing agents and foaming agents, wherein the uncured composition comprises from 10 to 60% by weight of aluminous cement and from 10 to 60% by weight of xonotlite, for the preparation of a molded part according to any of claims 1 to 4.

9. Use of a heat-resistant and refractory molded part in the form of a heat insulation plate having a density of from 400 to 1000 kg/m³ composed of hydraulically cured compositions, wherein the uncured composition comprises from 10 to 60% by weight of aluminous cement and from 10 to 60% by weight of xonotlite in addition to water, for heat insulation.

## Revendications

1. Pièce moulée résistant aux hautes températures et au feu sous la forme d'une bûche artificielle pour cheminées ou d'une brique légère avec une densité allant de 400 à 1000 kg/m³ consistant en des mélanges à prise hydraulique contenant dans le mélange n'ayant pas encore pris, à l'exception de l'eau, de 10 à 60 % en poids de ciment fondu contenant de l'alumine et de 10 à 60 % en poids de xonotlite.

2. Pièce moulée selon la revendication 1, **caractérisée en ce que** le mélange contient de 20 à 40 % en poids de ciment fondu contenant de l'alumine et de 20 à 40 % en poids de xonotlite synthétique.

3. Pièce moulée selon la revendication 1 ou 2, **caractérisée en ce qu'**elle contient en tant que charges de la wollastonite, de la tobermorite, de l'acide silicique amorphe fin et/ou de l'oxyde d'aluminium réactif.

4. Pièce moulée selon l'une des revendications 1 à 3, **caractérisée en ce qu'**elle contient des charges légères provenant du groupe comprenant la perlite, la vermiculite, des cendres volantes et/ou des billes de verre.

5. Procédé de fabrication d'une pièce moulée résistant aux hautes températures et au feu selon l'une des revendications 1 à 4, **caractérisé en ce qu'**un mélange de ciment fondu contenant de l'alumine, le cas échéant mélangé avec du ciment Portland, des liants phosphatés ou du verre soluble, des charges, comme souhaité, telles que des fibres, des accélérateurs de prise, des retardateurs de prise, des plastifiants et des agents moussants est mélangé à de l'eau, mis en forme et amené à prendre, le mélange n'ayant pas encore pris contenant de 10 à 60 % en poids de ciment fondu contenant de l'alumine et de 10 à 60 % en poids de xonotlite.

6. Procédé selon la revendication 5, pour la fabrication d'une bûche artificielle pour cheminées, **caractérisé en ce que** le mélange n'ayant pas encore pris est amené à prendre une forme qui correspond aux bûches naturelles.

7. Procédé selon la revendication 6, **caractérisé en ce que** soit le mélange est coloré avec des pigments résistant aux hautes températures, soit la bûche parfaitement durcie est teinte à l'extérieur avec des couleurs pigmentaires résistant aux hautes températures.

8. Utilisation d'un mélange à prise hydraulique contenant dans le mélange n'ayant pas encore pris, à l'exception de l'eau, un ciment fondu contenant de l'alumine, le cas échéant mélangé à du ciment Portland, des liants phosphatés ou du verre soluble, des charges, comme souhaité, telles que des fibres, des accélérateurs de prise, des retardateurs de prise, des plastifiants et des agents moussants, le mélange n'ayant pas encore pris contenant de 10 à 60 % en poids de ciment fondu contenant de l'alumine et de 10 à 60 % en poids de xonotlite pour la fabrication d'une pièce moulée selon l'une des revendications 1 à 4.

9. Utilisation d'une pièce moulée résistant aux hautes températures et au feu sous la forme d'un panneau calorifuge ayant une densité allant de 400 à 1000 kg/m³ consistant en des mélanges à prise hydraulique contenant dans le mélange n'ayant pas encore pris, à l'exception de l'eau, de 10 à 60 % en poids de ciment fondu contenant de l'alumine et de 10 à 60 % en poids de xonotlite pour le calorifugeage.
